# EUROPEAN PATENT SPECIFICATION

(11) **EP 3 043 121 B1**
(45) Date of publication and mention of the grant of the patent: **26.06.2019**
(21) Application number: 15150442.0
(22) Date of filing: 08.01.2015
(51) Int. Cl.: F24F 13/02, F16L 55/165

(54) **Relining a ventilation system**
Neuauskleidung eines Belüftungssystems
Regarnissage d'un système de ventilation

(43) Date of publication of application: 13.07.2016
(73) Proprietor: Linervent AB, 169 37 Solna (SE)
(72) Inventor: Håkansson, Stefan, 179 61 Stenhamra (SE); Sandqvist, Stefan, 722 19 Västerås (SE); Wijkander, Gustav, 197 92 Bro (SE)
(74) Representative: Brann AB

(56) References cited:
- EP-A2- 1 719 946
- WO-A1-01/96092
- CA-A1- 2 146 622
- SE-L- 8 405 760
- US-A1- 2004 134 551
- US-A1- 2007 006 986

## Description

### TECHNICAL FIELD

The present invention relates to the field of relining a ventilation system, in particular a ventilation duct.

### BACKGROUND

Ventilation piping or duct systems made of bricks-walls, asbestos elements, metal, concrete, and the like are used as ventilation ducts. Such piping or duct systems are used in commercial buildings, apartment buildings, homes and the like, where they eventually develop problems. These problems can be due to effects of liquids and gases such as corrosion and erosion or joinings (concrete or tape joinings) being old and may lead to leakage. These destructive effects can lead to leaks in the ventilation system if the piping or duct system is not changed or repaired. In order to change the pipes or ducts one often has to tear down parts of the building, in order to access old pipes or ducts. This is of course very time consuming and costly. Sometimes, changing or repairing the pipes or ducts is also hazardous due to materials hazardous to human health being used such as asbestos, which is hazardous when cut. Then changing or repairing the ventilation ducts may be more or less impossible due to health problems. At least, the cost when changing or repairing will be very high.

To repair ventilation ducts is known. For instance repairing with concrete is known. A "bag" with concrete thereon and adapted to an interior of the ventilation duct is pulled through the ventilation duct to apply concrete onto the inner walls of the ventilation duct. A drawback with this method is that it is difficult to provide an even layer of concrete on the inner walls, especially if a cross-section of the ventilation duct changes to a great extent.
WO 01/96092 A1 discloses a method and apparatus for lining a conduit according to the preamble of claim 1.
US 2007/0006986 A1 discloses a carrier for a vehicle and a method for the production thereof.

There are also problems if the cross-section of the ventilation duct is square and not circular, because the cross-sectional area of the repaired ventilation duct will be smaller than before because it is difficult or even impossible to distribute the concrete evenly into the sharp corners of the inner walls of the ventilation duct. A relining tube having circular cross-section would also reduce cross-section area if a ventilation duct having sharp corners is repaired with this type of re-lining tube, which is a drawback.

Not being able to use the ventilation system for several days is of course almost a problem and a faster method would be highly desirable.

It is also highly desirable that the repaired or renovated ventilation duct is able to withstand high stresses such as no cracks despite the duct itself crack. As an example ducts made of bricks often crack in the joinings. Similar problems exist in metal ventilation ducts that have been taped together, since the tape joinings crack after a long period of time. For ventilation ducts it is important, or often even required by authorities, that they are able to resist high temperatures in case of fire because the ventilation duct will often be exposed to very high temperatures in case of a fire.

### SUMMARY OF THE INVENTION

An aspect of the present invention provides a method of re-lining a ventilation duct for a building. First a flexible composite tube of fire-proof polymer material having at least a flexible tubular, or tube, fibre-core being impregnated with at ambient temperature self-curing polymer material is provided through the duct having inner walls and outer walls. Then compressed air is blown through the flexible composite tube so that the flexible composite tube is formed against the ventilation duct's inner wall(s) having a particular cross-section. Finally, the polymer material is allowed to self-cure at ambient temperature.

The present invention provides an alternative way of relining a ventilation system, in particular a ventilation duct, which method fulfils the requirements according to the various aspects and objects mentioned above and below, in particular being non-hazardous and being able to re-line also ventilation ducts having a square inner cross-section with sharp corners. The method of the present invention is particularly useful for relining asbestos ventilation ducts (typically made of asbestos elements) and to increase productivity when renovating ventilation systems, since the time before the ventilation system can be used again is strongly decreased compared to prior art methods.

According to another aspect of the present invention, there is provided a flexible composite tube for relining a ventilation duct. The flexible composite tube is made of fire-proof polymer material having at least a flexible tubular, or tube, fibre-core being impregnated with at ambient temperature self-curing polymer coating material.

According to an embodiment, the flexible composite tube is T-shaped adapted to form a junction.

According to an embodiment, the flexible composite tube is formed as a lid (part of a tube sewn together) adapted to plug a ventilation duct.

The invention will now be further described by way of examples and with reference to drawing figures.

### BRIEF DESCRIPTION OF DRAWING FIGURES

Fig. 1a illustrates an embodiment of the method according to the invention, wherein a flexible tube is used for relining a ventilation duct made of bricks. Fig. 1b illustrates a sectional view from above along line A-A in Fig. 1a;
Fig. 2a illustrates an embodiment of the flexible tube according to the invention, in a cross-sectional view along line A-A in Fig. 1a;
Fig. 2b illustrates the same embodiment as in Fig. 2a when blown up; and
Fig. 3 illustrates a T-junction according to an embodiment of the present invention.

### DESCRIPTION OF THE INVENTION

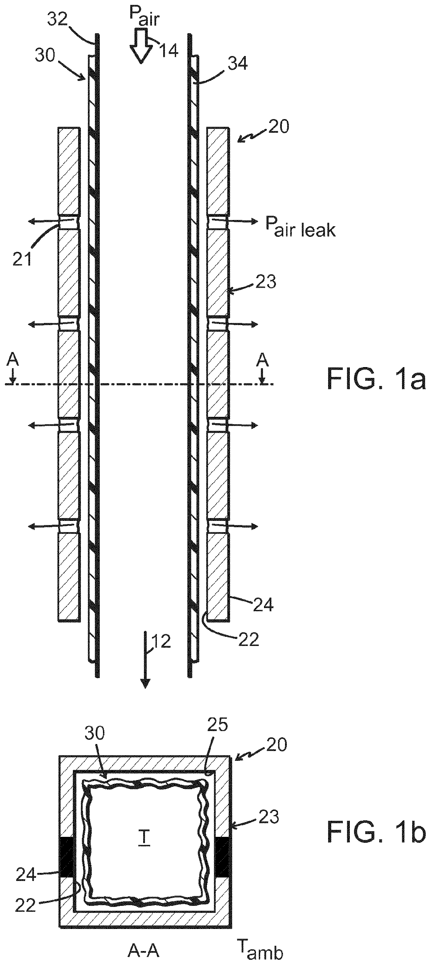

Now is referred to Fig. 1a, which illustrates an embodiment of the method according to the invention, wherein a flexible tube 30 is used for relining a ventilation duct 20 made of bricks. The ventilation duct 20 is a typical ventilation duct 20 made of separate duct elements 23, such as conventional clay bricks, or asbestos elements. Air leaks (See arrows P_{air leak}) through un-tight sealings 21, for instance made of concrete, between the duct elements 23.

First a flexible composite tube 30 made of fire-proof polymer material having at least a flexible tubular, or tube, fibre-core 32 being impregnated with at ambient temperature self-curing polymer material 34 is or has been drawn through the ventilation duct 20 having inner walls 22 and outer walls 24. Then compressed air from a source (not shown) is blown (See arrow Pₐᵢᵣ) through the flexible composite tube 30 so that the flexible composite tube 30 is formed, typically pressed, against the ventilation duct's 20 inner wall(s) 22 having a particular cross-section (See Fig. 1b). Finally, the self-curing polymer material 34 is allowed to self-cure at ambient temperature T_{ambient}.

According to an alternative embodiment, the ventilation duct 20 is a system of ventilation ducts 20.

According to various embodiments, the temperature can be ambient temperature T_{amb} without or with external heating.

Fig. 1b illustrates a sectional view from above along line A-A in Fig. 1a. In Fig. 1b it is shown how the flexible composite tube 30 is pressed against the inner walls 22 of the duct 20. The cross-section T of the ventilation duct 20 is square in shape having sharp corners 25 into which the flexible composite tube 30 is pressed. The flexible composite tube 30 is formed against the ventilation duct's 20 inter walls 22 having a square cross-section T with sharp inner corners 25, so that the flexible composite tube is formed also into the sharp inner corners 25 and also has an essentially, or a square cross section T. This is in contrast to prior art, wherein typically any re-liner such as a re-liner tube (not shown) typically being circular in cross-section or re-lining material such as concrete on a bag is not able to adapt to the square cross-section and hence will have much smaller cross-section, which reduce effective area of flow. The invention provides a flexible tube 30 that is also able to adapt to changing cross-sectional area T, at least up to 50 % and also to cross-sectional area that changes from circular to square or vice versa. The flexible composite tube 30 is also able to adapt to bends, and extending parts of the ventilation duct since it 30 is flexible.

The method according to an embodiment of the present invention will now be described with reference to Fig. 1a. A flexible composite tube 30 of fire-proof polymer material having at least a flexible tubular, or tube, fibre-core 32 being impregnated with at ambient temperature self-curing polymer material 34 is provided 12, for instance drawn by a weight (as shown by the arrow) through the duct 20 having inner walls 22 and outer walls 24. Without departing from the invention, the flexible composite tube 30 can be drawn in opposite direction for instance by means of a wire or having been provided into the ventilation duct 20 in any other suitable way, obvious for the skilled person. Preferably, but without limitation thereto, the flexible composite tube 30 is wringed through the ventilation duct 20 and wringed out by pressurised air. This embodiment is in particular suitable for ventilation ducts having 90° (or other sharp bends) bends and solves the problem with not being able to draw the tube 30 through the ventilation duct 20.

Then, compressed air Pₐᵢᵣ is blown 14 through, in the longitudinal direction (direction of the arrow Pₐᵢᵣ) of the ventilation duct 20, the flexible composite tube 30 so that the flexible composite tube 30 is formed, typically pressed, against the ventilation duct's 20 inner wall(s) 22 having a particular cross-section (T) (As shown in Fig. 1b). Then, the self-curing polymer 34 impregnating the fibre-core 32 is allowed to cure at ambient temperature T_{amb} providing a flexible re-lining for the ventilation duct 20. The re-lining is fire-resistant so that in case of a fire, the ventilation duct 20 will not burn or melt as easy as without the re-lining according to the invention. The re-lining according to the invention is flexible so that cracks or other movements in the walls of the ventilation duct 20 will not crack the flexible tube 30. In this way, a sealed ventilation duct 20 will always be provided.

The method typically takes 24-48 hours to perform and complete for a conventional ventilation system in a 3-5 stories building and results in a strong, chemically, mechanically and thermally resistant relining of the interior of the ventilation system, in particular the duct. An advantage compared to prior art methods is that the invented method does not require additional heating to cure the flexible composite tube.

According to an embodiment of the present invention, the flexible composite tube 30 is very flexible, up to 50 % increased cross-sectional area T, compared to other wall coverings or re-lining materials and/or methods. The flexible composite tube 30 also handles sharp bends of the ventilation duct 20, such as 90° bends.

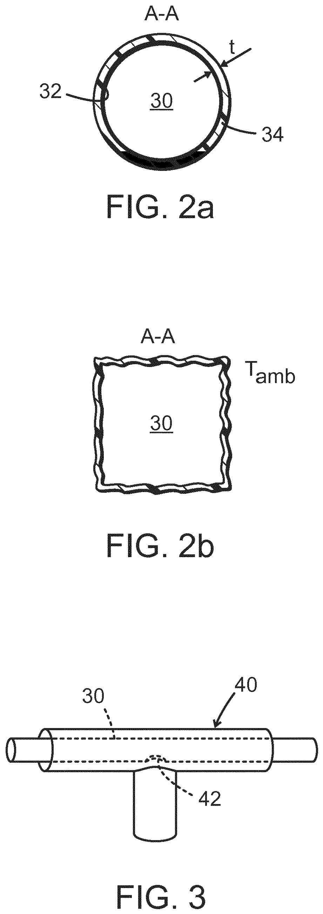

Now is referred to Fig. 2a illustrating an embodiment of the flexible tube according to the invention before being blown-up, in a cross-sectional view along line A-A in Fig. 1a and Fig. 2b illustrating the same flexible tube 30 after being blown-up.

According to an embodiment of the present invention, there is provided a flexible composite tube 30 for relining a ventilation duct (not shown in this figure). The flexible composite tube 30 is made of fire-proof polymer material having at least a flexible tubular, or tube, fibre-core 32 being impregnated with at ambient temperature self-curing polymer material 34.

An example of a flexible tubular, or tube, fibre-core 32 that can be used is a woven flexible tube made of reinforcing fibres such as glass-fibres, Kevlar® fibres or Dacron® fibres, but any type of fibre suitable for a flexible tubular, or tube, fibre-core 32 that can be impregnated with a self-curing polymer 34 can be used instead provided the fibres of the tubular, or tube, fibre-core 32 are fire resistant and capable of being impregnated with the self-curing polymer 34.

The self-curing polymer 34 impregnating the flexible fibre-core 32 can be applied in any suitable way. The self-curing polymer can be a silane-based polymer composition or any other fire-resistant self-curing polymer. Linear silanes such as mono-di-, tri, tetra-silanes can be used. Alternatively, branched silanes such as silyl, disilanyl etc. can be used. Other compositions based on Si may also be used instead.

It is also possible to apply thicker polymer layer than known technology, which implies better wear resistance and insulation compared to known methods. A thickness t of the wall made up of the fibre-core 32 and the self-curing polymer 34 is between 2-6 mm. This implies high wear-resistance and heat-insulating properties compared to prior art re-lining. The invention also reduces problems with noise.

Now is referred to Fig. 3 illustrates a T-junction 40 according to an embodiment of the present invention. The T-junction 40 is made of a flexible composite tube for relining a ventilation duct. The T-junction 40 is made of fire-proof polymer material having at least a flexible tube fibre-core 32 being impregnated with at ambient temperature self-curing polymer material 34. The T-junction is adapted to receive the flexible composite tube 30 as shown and described in relation to Fig. 2a. By means of the T-junction 40 having received the flexible composite tube 30 it is possible to easily, for instance by means of a knife, and without drilling, cut a hole 42 inside the T-junction to be able to form a T-junction on site when renovating or building ventilation ducts (not shown).

## Claims

1. A method of re-lining a ventilation duct (20) for a building comprising the steps of:
- providing (12) a flexible composite tube (30) of fire-proof polymer material having at least a flexible tubular fibre-core (32) being impregnated with at ambient temperature self-curing polymer material (34) through the duct (20) having inner walls (22) and outer walls (24) and **characterized in that** the ventilation duct has a square cross section (T) with sharp inner corners (25); the method being further **characterized in** blowing (14) compressed air through the flexible composite tube so that the flexible composite tube is formed against the ventilation duct's (20) inner wall(s) (22) so that the flexible composite tube (30) is formed also into the sharp inner corners (25), and allowing the self-curing polymer (34) to self-cure at ambient temperature (T_{amb}).

2. The method according to claim 1, wherein the ventilation duct (20) is a system of ventilation ducts (20).

3. The method according to claim 1, wherein the temperature is ambient temperature (T_{amb}) without external heating.

4. The method according to claim 1, wherein the flexible composite tube (30) is T-shaped (40) adapted to form a junction.

5. The method according to claim 1, wherein the flexible composite tube (30) is formed as a lid adapted to plug a ventilation duct.

## Patentansprüche

1. Verfahren zum Neuauskleiden einer Belüftungsleitung (20) für ein Gebäude, umfassend die Schritte:
- Bereitstellen (12) eines flexiblen Verbundrohrs (30) aus feuerfestem Polymermaterial, das mindestens einen flexiblen, rohrförmigen Faserkern (32) aufweist, der mit einem bei Umgebungstemperatur selbsthärtendem Polymermaterial (34) durch die Leitung (20) imprägniert ist, Innenwände (22) und Außenwände (24) aufweist und **dadurch gekennzeichnet ist, dass** die Belüftungsleitung einen quadratischen Querschnitt (T) mit scharfen Innenecken (25) aufweist;
wobei das Verfahren weiter **gekennzeichnet ist durch**
Blasen (14) von Druckluft durch das flexible Verbundrohr, so dass das flexible Verbundrohr gegen die Innenwand/wände (22) der Belüftungsleitung (20) so geformt wird, dass das flexible Verbundrohr (30) auch in den scharfen Innenecken (25) geformt wird, und wobei es dem selbsthärtenden Polymer (34) erlaubt wird, bei Umgebungstemperatur (T_{amb}) selbst zu härten.

2. Verfahren nach Anspruch 1, wobei die Belüftungsleitung (20) ein System vom Belüftungsleitungen (20) ist.

3. Verfahren nach Anspruch 1, wobei die Temperatur Umgebungstemperatur (T_{amb}) ohne externe Heizung ist.

4. Verfahren nach Anspruch 1, wobei das flexible Verbundrohr (30) T-förmig (40) angepasst ist, um eine Verbindungsstelle zu formen.

5. Verfahren nach Anspruch 1, wobei das flexible Verbundrohr (30) als ein Deckel geformt ist, der angepasst ist, um eine Belüftungsleitung zu stopfen.

## Revendications

1. Procédé de regarnissage d'un conduit de ventilation (20) pour un bâtiment comprenant les étapes de :
- la fourniture (12) d'un tube composite flexible (30) de matériau polymère ignifuge présentant au moins un coeur de fibre tubulaire flexible (32) qui est imprégné avec un matériau polymère autopolymérisant à température ambiante (34) au travers du conduit (20) présentant des parois intérieures (22) et des parois extérieures (24) et **caractérisé en ce que** le conduit de ventilation présente une section transversale carrée (T) avec des coins intérieurs pointus (25) ;
le procédé étant en outre **caractérisé par** le soufflage (14) d'air comprimé au travers du tube composite flexible de sorte que le tube composite flexible soit formé contre le(s) paroi(s) intérieure(s) (22) de conduit de ventilation (20) de sorte que le tube composite flexible (30) soit aussi formé dans les coins intérieurs pointus (25), et par le fait de permettre au polymère autopolymérisant (34) de s'autopolymériser à température ambiante (T_{amb}).

2. Procédé selon la revendication 1, dans lequel le conduit de ventilation (20) est un système de conduits de ventilation (20).

3. Procédé selon la revendication 1, dans lequel la température est une température ambiante (T_{amb}) sans chauffage externe.

4. Procédé selon la revendication 1, dans lequel le tube composite flexible (30) est en forme de T (40) adapté pour former une jonction.

5. Procédé selon la revendication 1, dans lequel le tube composite flexible (30) est formé en tant que couvercle adapté pour obturer un conduit de ventilation.
